# EUROPEAN PATENT SPECIFICATION

(11) **EP 0 687 556 B1**
(45) Date of publication and mention of the grant of the patent: **10.03.1999**
(21) Application number: 95303866.8
(22) Date of filing: 06.06.1995
(51) Int. Cl.: B32B 25/02

(54) **Method of producing joint sheet and the joint sheet**
Verfahren zur Herstellung von Verbundfolie und Verbundfolie
Procédé de production d'une feuille jointe et feuille jointe

(30) Priority: 17.06.1994 JP 135741/94
(43) Date of publication of application: 20.12.1995
(73) Proprietor: HONDA GIKEN KOGYO KABUSHIKI KAISHA, Minato-ku Tokyo (JP); NIPPON LEAKLESS INDUSTRY Co., Ltd., Minato-ku, Tokyo (JP)
(72) Inventor: Tomizawa, Tsutomu, Wako City, Saitama Pref. (JP); Tatemichi, Yoshihiko, Wako City, Saitama Pref. (JP); Fujiwara, Ken, c/o Nippon Leakless Industry Co.Ltd, Urawa City, Saitama Pref. (JP); Hoshi, Masamichi, c/o Nippon Leakless Ind.Co. Ltd, Urawa City, Saitama Pref. (JP); Nakano, Hiroyuki, c/o Nippon Leakless Ind. Co. Ltd, Urawa City, Saitama Pref. (JP)
(74) Representative: Senior, Alan Murray

(56) References cited:
- EP-A- 0 219 379
- FR-A- 2 403 359
- GB-A- 2 013 564
- US-A- 5 292 579
- DATABASE WPI Section Ch, Week 8724 Derwent Publications Ltd., London, GB; Class A88, AN 87-168140 & JP-A-62 101 680 ( NIPPON VALQUR KOGYO) , 12 May 1987
- DATABASE WPI Section Ch, Week 8605 Derwent Publications Ltd., London, GB; Class A83, AN 86-033681 & JP-A-57 150 570 ( HAYAKAWA GUM KK) , 17 September 1982
- DATABASE WPI Section Ch, Week 7715 Derwent Publications Ltd., London, GB; Class A35, AN 77-26038Y & JP-A-52 027 488 ( BRIDGESTONE TIRE KK) , 1 March 1977
- DATABASE WPI Section Ch, Week 8916 Derwent Publications Ltd., London, GB; Class A88, AN 89-118110 & JP-A-01 063 135 ( ASUKU KK) , 9 March 1989
- DATABASE WPI Section Ch, Week 9434 Derwent Publications Ltd., London, GB; Class A35, AN 94-275705 & JP-A-06 206 281 ( KURASHIKI KAKO KK) , 26 July 1994

## Description

This invention relates to a method of producing a joint sheet of a type used as the material for a gasket or packing for automobiles, ships, various machineries and equipment and the like.

US-A-5 292 579 discloses how a joint sheet is produced by inserting a composition for the formation of the joint sheet, comprising inorganic fibers or organic fibers or a mixture thereof, a rubber material, rubber additives and a filler, between a pair of rollers comprising a hot roller and a cold roller to heat and roll the composition, laminating the composition on the hot roller in the form of a sheet, and then peeling off the laminated sheet from the hot roller. Next, the resulting joint sheet is punched out in a shape to be used as packing.

However, when the joint sheet is punched out in the form of a packing piece, a great amount of scrap material in the form of punched pieces corresponding to 60-70% of the joint sheet is created, so that there are problems that the material yield is low and the cost is increased.

It is, therefore, an object of the invention to alleviate the aforementioned problems and to provide a joint sheet and a method of producing the same.

According to a first aspect of the invention, there is provided a method of producing joint sheets comprising the steps of:-
kneading a composition 1 for the formation of one joint sheet; feeding the composition between a pair of rollers comprising a hot roller 2 and a cold roller 3; heating and rolling the composition; and removing the resulting sheet from the rollers to obtain said one joint sheet 7, characterised by the steps of:-
finely pulverizing scrap material recovered from a previous joint sheet into particles by means of a grinder; and including the resulting particles in the said composition 1 prior to formation of the sheet so that the composition is partly reclaimed, and wherein the reclaimed composition for the formation of joint sheet comprises not more than 50 weight % of particles, and the scrap material is pulverized into particles having a particle size of not more than 1.4 mm, and wherein a first composition not containing said particles is fed between the pair of rollers 2,3, to form a first layer 7a on the hot roller 2, then said reclaimed composition including said particles is fed between the pair of rollers 2,3 to form a second layer 7b on top of the first layer 7a, and a third composition also not containing particles is fed between the pair of rollers 2,3 to form a third layer 7c upon the second layer so that the joint sheet 7 is a laminate of said three layers, said compositions comprising inorganic fibers or organic fibers or a mixture thereof, a rubber material, rubber additives and a filler.

According to a second aspect of the invention, there is provided a joint sheet consisting of a first layer made from a first composition for the formation of joint sheets, a second layer made by finely pulverizing scrap material obtained from a previous joint sheet into particles having a particle size of not more than 1.4 mm by means of a grinder and which are included in a second, reclaimed, composition for the formation of joint sheet in an amount of not more than 50 weight%, and a third layer made from a third composition for the formation of joint sheet, the compositions comprising inorganic fibers or organic fibers or a mixture thereof, a rubber material, rubber additives and a filler.

The term "scrap material" used herein is understood to include redundant scraps of the composition from the formation of the sheet, defective goods, a fragment produced at a cutting step, in addition to pieces produced in the punching of the sheet.

As mentioned above, according to the invention, since pieces of the joint sheet produced in the conventional punching of the joint sheet into the form of packing can be reused, not only is the material yield improved and the cost decreased, but also industrial wastes are reduced. Furthermore, each of the first and third layers in the joint sheet according to the invention form an outer face which is made from a joint sheet material not including the pulverized scrap material of a joint sheet, so that the seal surface is smooth and even and consequently sufficient sealing performance can be developed.

The invention will be described with reference to the accompanying drawings, wherein:
Fig. 1 is a schematic view illustrating a method of producing a joint sheet;
Fig. 2 is a partially enlarged sectional view of a known sheet laminate laminated on a hot roller;
Fig. 3 is a partially enlarged sectional view illustrating an embodiment of the joint sheet according to the invention laminated on the hot roller; and
Fig. 4 is a graph showing the relation between the amount of scrap material added and the tensile strength of the resulting joint sheet.

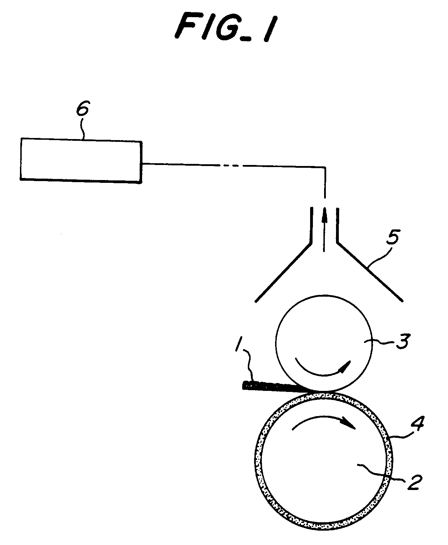

According to the invention, a composition 1 for the formation of the joint sheet comprising inorganic fibers or organic fibers or a mixture thereof, a rubber material, rubber additives and a filler, which is kneaded, for example, in an agitator, is inserted between a pair of rollers comprising a hot roller 2 and a cold roller 3 (see Fig. 1), whereby the composition 1 is heated and rolled to laminate the composition 1 on the hot roller 2 in the form of a sheet 4. The laminated sheet 4 is peeled off from the hot roller and punched out into a shape to be used as packing. Then, scrap material comprising punched pieces of the joint sheet which do not form the packing are finely pulverized into particles having a particle size of not more than 1.4 mm by means of a grinder and added to the composition mentioned above in an amount of not more than 50 weight% to produce a subsequent joint sheet according to the invention.

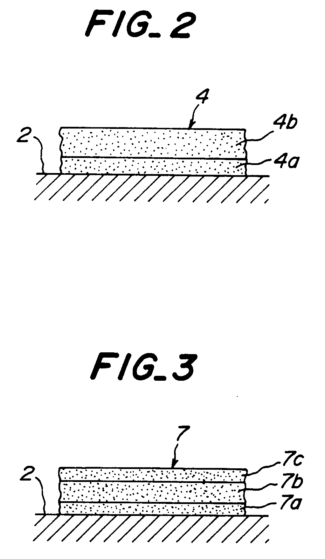

In Fig. 1, numeral 5 labels a guide for recovering a solvent such as toluene or the like disposed above the cold roller 3, and numeral 6 indicates a solvent recovering vessel. Fig. 2 is a partially enlarged sectional view of the conventional sheet laminate 4 laminated on the hot roller 2, in which numeral 4a is a first layer of the sheet laminate and number 4b a second layer thereof. Fig. 3 is a partially enlarged sectional view of a reclaimed joint sheet 7 of three layer construction according to one aspect of the invention laminated on the hot roller 3, in which numeral 7a is a first layer, number 7b a second layer and numeral 7c a third layer.

For the inorganic fiber, use may be made of glass fiber, rock wool, various ceramic fibers, carbon fiber and metal fiber.

For the organic fiber, use may be made of aromatic polyamide fiber, fibrillated aromatic polyamide fiber, polyamide fiber, polyolefine fiber and the like.

These inorganic fibers and organic fibers may be used alone or in admixture thereof. In the case of the mixture of the inorganic fiber and organic fiber, the mixing ratio of the inorganic fiber to the organic fiber is preferably about 1 : 1 - 4 : 1 in weight ratio. Furthermore, these fibers are preferably compounded into the joint sheet in an amount of about 10-60 weight%.

For the rubber material, use may be made of nitrile rubber (NBR), styrene-butadiene rubber (SBR), isoprene rubber (IR), chloroprene rubber (CR), ethylene-propylene rubber (EPM), fluororubber (FPM), silicone rubber (SI) and the like. The rubber material is preferably compounded into the joint sheet in an amount of about 10-30 weight%.

For the rubber additives, a vulcanizing agent such as sulfur, zinc oxide, magnesium oxide or the like may be used, and a vulcanization accelerator such as thiazole compound, polyamine compound, sulfenamide compound, guanidine compound or the like may be used. The rubber additives can be compounded into the joint sheet in an amount of about 0.5-10 weight%.

For the filler, use may be made of clay, talc, barium sulfate, sodium bicarbonate, graphite, calcium carbonate, carbon black, diatomaceous earth, mica, aluminium sulfate, alumina hydrate, magnesium carbonate and the like. The filler can be compounded into the joint sheet in an amount of about 10-70 weight%.

An example of a first composition for the first layer 4a shown in Fig. 2 is shown as follows.

| | |
|---|---|
| Fibrillated aromatic polyamide fiber | 15 weight% |
| NBR | 12 weight% |
| Rubber additives | 3 weight% |
| Filler | 70 weight% |
| Toluene | 0.4 l per kg of the above mentioned mixture |

An example of a second composition for the second layer 4b shown in Fig. 2 is shown as follows.

| | |
|---|---|
| Fibrillated aromatic polyamide fiber | 10 weight% |
| Glass fiber | 10 weight% |
| NBR | 18 weight% |
| Rubber additives | 2 weight% |
| Filler | 60 weight% |
| Toluene | 0.4 1 per kg of the above mentioned mixture |

The above first and second compositions are used to produce a joint sheet as follows. At first, the first composition is inserted between the hot roller 2 heated to 120-150°C and the cold roller 3 maintained at 30-50°C. When the thickness of the first composition reaches 10-20% of the thickness of the desired sheet, the second composition is added onto the first composition to form a sheet laminate shown in Fig. 2. In this case, pressure between the rollers 2, 3 is maintained at about 20-40 bar. Thereafter, the sheet laminate is subjected to a vulcanization treatment at an ambient temperature of 100-150°C in a drying furnace for 30-60 minutes. The thus obtained joint sheet is subjected to punching and used as a packing member.

According to the invention, the scrap material from punching the above joint sheet is charged into a grinder, where it is finely pulverized at 5000 rpm into particles having a particle size of not more than 1.4 mm and added to a composition such as those mentioned above for reuse.

In the joint sheet according to the invention, the amount of scrap material added is in practice to be not more than 50 weight%. An example of a composition for the formation of the reclaimed joint sheet containing 10 weight%, 30 weight% or 50 weight% of scrap material is shown as follows.

| Scrap Material | 10 weight% | 30 weight% | 50 weight% |
|---|---|---|---|
| Fibrillated aromatic polyamide fiber | 18 weight% | 6.5 weight% | 4 weight% |
| Glass fiber | 18 weight% | 6.5 weight% | 4 weight% |
| NBR | 18 weight% | 18 weight% | 18 weight% |
| Rubber additives | 2 weight% | 2 weight% | 2 weight% |
| Filler | 52 weight% | 37 weight% | 22 weight% |
| Toluene 0.4 l per kg of the above mentioned mixture. | | | |

Moreover, an embodiment of the reclaimed joint sheet 7 shown in Fig. 3 is shown as follows:

| Layer | First Layer (7a) | Second Layer (7b) | Third Layer (7c) |
|---|---|---|---|
| Fibrillated aromatic polyamide fiber | 15 weight% | 6.4 weight% | 10 weight% |
| Glass fiber | - | 6.4 weight% | - |
| NBR | 12 weight% | 15 weight% | 18 weight% |
| Rubber additives | 3 weight% | 2 weight% | 2 weight% |
| Filler | 70 weight% | 40.2 weight% | 70 weight% |
| Scrap material | - | 30 weight% | - |
| Toluene 0.41 l per kg of the above mentioned mixture. | | | |

The above compositions can be used to produce a reclaimed joint sheet as follows. At first, the composition for the first layer 7a is inserted between the hot roller 2 heated to 120-150°C and the cold roller 3 maintained at 30-50°C. When the thickness of the composition reaches 10-20% of the thickness of the desired sheet, the composition for the second layer 7b is inserted between the hot roller and the cold roller. When the thickness of the composition on top of the first layer reaches to 70-80% of the thickness of the desired sheet, the composition for the third layer 7c is inserted between the hot roller and the cold roller to form a joint sheet. In this case, a pressure between the rollers 2, 3, is maintained at about 20-40 bar. Thereafter, the sheet laminate may be subjected to a vulcanization treatment at an ambient temperature of 100-150°C in a drying furnace for 30-60 minutes.

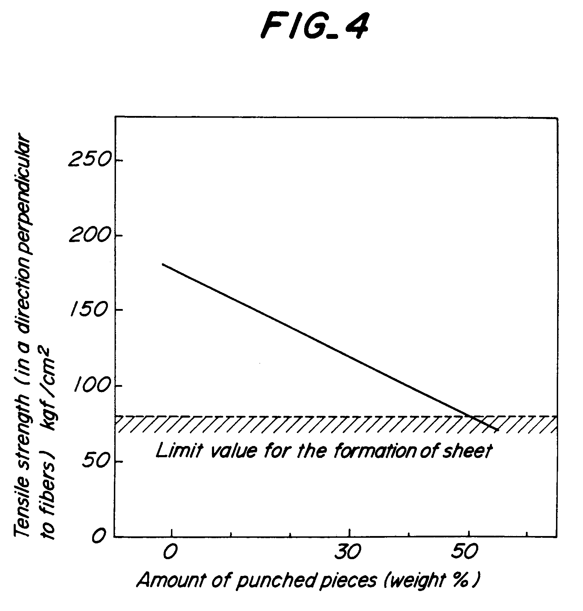

In the present invention, the reason why the particle size in the fine pulverization of the scrap material is limited to not more than 1.4 mm is due to the fact that when the particle size exceeds 1.4 mm, the particle size as an additive becomes too coarse and lowers the quality of the reclaimed joint sheet. Further, the reason why the amount of the scrap material added is limited to not more than 50 weight% is due to the fact that when the amount exceeds 50 weight%, the quality of the reclaimed joint sheet is degraded. That is, when the scrap material is added in an amount of more than 50 weight% adhesion of the composition to the cold roller is caused in the formation of the sheet and the quality of the resulting reclaimed joint sheet is frequently degraded. Also, as shown in Figure 4, when the amount of scrap punched pieces, added exceeds 50 weight%, the tensile strength falls below a satisfactory value of about 80 kgf/cm².

As mentioned above, according to the invention, scrap material comprising punched pieces of the joint sheet after the punching of the joint sheet as packing can be reused, so that not only the material yield is improved and the cost is decreased, but also industrial wastes are reduced. Further, each of the first and third layers in the reclaimed joint sheet according to the invention is made from a joint sheet containing no scrap material, so that the seal surface of the joint sheet becomes smooth and even, and hence sufficient sealing performance can be developed.

## Claims

1. A method of producing joint sheets comprising the steps of:-
kneading a composition (1) for the formation of one joint sheet;
feeding the composition between a pair of rollers comprising a hot roller (2) and a cold roller (3);
heating and rolling the composition; and
removing the resulting sheet from the rollers to obtain said one joint sheet (7), characterised by the steps of:-
finely pulverizing scrap material recovered from a previous joint sheet into particles by means of a grinder; and
including the resulting particles in the said composition (1) prior to formation of the sheet so that the composition is partly reclaimed, and
wherein the reclaimed composition for the formation of joint sheet comprises not more than 50 weight % of particles, and the scrap material is pulverized into particles having a particle size of not more than 1.4 mm, and
wherein a first composition not containing said particles is fed between the pair of rollers (2,3), to form a first layer (7a) on the hot roller (2), then said reclaimed composition including said particles is fed between the pair of rollers (2,3) to form a second layer (7b) on top of the first layer (7a), and a third composition also not containing particles is fed between the pair of rollers (2,3) to form a third layer (7c) upon the second layer so that the joint sheet (7) is a laminate of said three layers, said compositions comprising inorganic fibers or organic fibers or a mixture thereof, a rubber material, rubber additives and a filler.

2. A method of making a packing piece by forming a joint sheet by the method of claim 1 and punching it out to shape, wherein punched out pieces constitute said scrap material.

3. A joint sheet consisting of a first layer (7a) made from a first composition for the formation of joint sheets, a second layer (7b) made by finely pulverizing scrap material obtained from a previous joint sheet into particles having a particle size of not more than 1.4 mm by means of a grinder and which are included in a second, reclaimed, composition for the formation of joint sheet in an amount of not more than 50 weight %, and a third layer (7c) made from a third composition for the formation of joint sheet, the compositions comprising inorganic fibers or organic fibers or a mixture thereof, a rubber material, rubber additives and a filler.

4. A joint sheet according to claim 3, wherein the inorganic fiber is selected from glass fiber, rock wool, various ceramic fibers, carbon fiber and metal fiber, and the organic fiber is selected from aromatic polyamide fiber, fibrillated aromatic polyamide fiber, polyamide fiber and polyolefine fiber.

5. A joint sheet according to claim 3 or 4, wherein the compositions comprise a mixture of inorganic fiber and organic fiber in a ratio of inorganic fiber to organic fiber of about 1 : 1 - 4 : 1 in weight ratio.

6. A joint sheet according to claim 3, 4 or 5, wherein the joint sheet contains 10-60 weight % of the inorganic fibers or the organic fibers or the mixture thereof as the case may be.

7. A joint sheet according to any one of claims 3 to 6, wherein the rubber material is selected from nitrile rubber, styrene-butadiene rubber, isoprene rubber, chloroprene rubber, ethylene-propylene rubber, fluororubber and silicone rubber and compounded into the joint sheet in an amount of 10-30 weight %.

8. A joint sheet according to any one of claims 3 to 7, wherein the rubber additives are selected from a vulcanizing agent and a vulcanization accelerator, and compounded into the joint sheet in an amount of 0.5-10 weight %.

9. A joint sheet according to any one of claims 3 to 8, wherein the filler is selected from clay, talc, barium sulphate, sodium bicarbonate, graphite, calcium carbonate, carbon black, diatomaceous earth, mica, aluminum sulphate, alumina hydrate and magnesium carbonate, and compounded into the joint sheet in an amount of 10-70 weight %.

10. A packing piece comprising a joint sheet according to any one of claims 3 to 9, punched out to shape.

## Patentansprüche

1. Ein Verfahren zum Herstellen von Verbundfolien, wobei das Verfahren die folgenden Schritte aufweist:
Kneten einer Zusammensetzung (1) fuhr die Bildung einer Verbundfolie; Zuführen der Zusammensetzung zwischen ein Paar von Walzen mit einer warmen Walze (2) und einer kalten Walze (3);
Erwärmen und Walzen der Zusammensetzung; und Entnehmen der resultierenden Folie von den Walzen, um die genannte
eine Verbundfolie (7) zu erhalten, **gekennzeichnet durch** die folgenden Schritte:
feines Pulverisieren eines aus einer vorhergehenden Verbundfolie zurückgewonnenen Abfallmaterials in Teilchen mit Hilfe einer Schleifmaschine; und
Einbringen der resultierenden Teilchen in die genannte Zusammensetzung (1) vor der Bildung der Folie, so daß die Zusammensetzung teilweise regeneriert wird,
wobei die regenerierte Zusammensetzung für die Bildung der Verbundfolie nicht mehr als 50 Gew.- % an Teilchen enthält und das Abfallmaterial in Teilchen mit einer Teilchengröße von nicht mehr als 1,4 mm pulverisiert wird und
wobei eine erste Zusammensetzung, welche die genannten Teilchen nicht enthält, zwischen das Paar von Walzen (2, 3) zugeführt wird, um eine erste Schicht (7a) an der warmen Walze (2) zu bilden, sodann die regenerierte, die genannten Teilchen enthaltende Zusammensetzung zwischen das Paar von Walzen (2, 3) zugeführt wird, um eine zweite Schicht (7b) an der Oberseite der ersten Schicht (7a) zu bilden, und eine dritte Zusammensetzung, welche ebenfalls Teilchen nicht enthält, zwischen das Paar von Walzen (2, 3) zugeführt wird, um eine dritte Schicht (7c) auf der zweiten Schicht zu bilden, so daß die Verbundfolie (7) ein Laminat aus den genannten drei Schichten ist, und wobei die genannten Zusammensetzungen anorganische Fasern oder organische Fasern oder eine Mischung aus diesen, ein Gummimaterial, Gummizusätze und einen Füller aufweisen.

2. Ein Verfahren zum Herstellen eines Dichtungsteils durch Bilden einer Verbundfolie durch das Verfahren nach Anspruch 1 und durch Ausstanzen des Dichtungsteils zu einem Formstück, wobei gestanzte Stücke das genannte Abfallmaterial bilden.

3. Ein Verbundfolie, aufweisend: eine erste Schicht (7a), welche aus einer ersten Zusammensetzung für die Bildung von Verbundfolien hergestellt ist, eine zweite Schicht (7b), welche durch feines Pulverisieren von Abfallmaterial, welches aus einer vorhergehenden Verbundfolie erhalten ist, in Teilchen mit einer Teilchengröße von nicht mehr als 1,4 mm mit Hilfe einer Schleifmaschine hergestellt ist, wobei diese Teilchen in eine zweite, regenerierte Zusammensetzung für die Bildung der Verbundfolie in einer Menge von nicht mehr als 50 Gew.-% eingebracht sind, und eine dritte Schicht (7c), welche aus einer dritten Zusammensetzung für die Bildung der Verbundfolie hergestellt ist, wobei die Zusammensetzungen anorganische Fasern oder organische Fasern oder eine Mischung von diesen, ein Gummimaterial, Gummizusätze und einen Füller enthalten.

4. Eine Verbundfolie gemäß Anspruch 3, bei welcher die anorganische Faser ausgewählt ist aus Glasfaser, Steinwolle, verschiedenen keramischen Fasern, Kohlenstofffasern und Metallfaser und die organische Faser ausgewählt ist aus aromatischer Polyamidfaser, fibrillierter aromatischer Polyamidfaser, Polyamidfaser und Polyolefinfaser.

5. Eine Verbundfolie gemäß Anspruch 3 oder 4, bei welcher die Zusammensetzungen eine Mischung aus anorganischer Faser und organischer Faser in einem Verhältnis von anorganischer Faser zur organischer Faser von etwa 1:1 bis 4:1 im Gewichtsverhältnis aufweisen.

6. Eine Verbundfolie gemäß Anspruch 3, 4 oder 5, bei welcher die Verbundfolie 10 bis 60 Gew. -% der anorganischen Fasern oder der organischen Fasern oder deren Mischung, je nach dem, enthält.

7. Eine Verbundfolie nach einem der Ansprüche 3 bis 6, bei welcher das Gummimaterial ausgewählt ist aus Nitrilgummi, Styrol-Butadiengummi, Isoprengummi, Chloropren-Gummi, Ethylen-Propylengummi, Fluorgummi und Silikongummi und in die Verbundfolie in einer Menge von 10 bis 30 Gew.- % eingebunden ist.

8. Eine Verbundfolie nach einem der Ansprüche 3 bis 7, bei welcher die Gummizusätze ausgewählt sind aus einem Vulkanisierungsmittel und einem Vulkanisierungsbeschleuniger und in die Verbundfolie in einer Menge von 0,5 bis 10 Gew.- % eingebunden sind.

9. Eine Verbundfolie nach einem der Ansprüche 3 bis 8, bei welcher der Füller ausgewählt ist aus Ton, Talkum, Bariumsulphat, Natriumbicarbonat, Graphit, Kalziumcarbonat, Ruß, Diatomeenerde, Glimmer, Aluminiumsulfat, Aluminiumoxid-Hydrat und Magnesiumkarbonat und in die Verbundfolie in einer Menge von 10 bis 70 Gew. - % eingebunden ist.

10. Ein Dichtungsteil, welches eine Verbundfolie gemäß einem der Ansprüche 3 bis 9 aufweist, wobei das Dichtungsteil zu einem Formstück ausgestanzt ist.

## Revendications

1. Procédé de production de feuilles composites, comportant les étapes suivantes :
- malaxer une composition (1) destinée à la formation de feuilles composites ;
- envoyer cette composition entre deux rouleaux dont l'un est un rouleau chaud (2) et l'autre est un rouleau froid (3);
- chauffer et rouler cette composition;
et
- enlever la feuille résultante des rouleaux, pour obtenir ladite feuille composite ;
caractérisé par les étapes suivantes :
- pulvériser en fines particules, à l'aide d'un broyeur, des déchets récupérés à partir d'une autre feuille composite formée antérieurement;
et
- incorporer les particules ainsi obtenues dans ladite composition (1), avant de former la feuille, de sorte que la composition est en partie recyclée ;
dans lequel procédé la composition recyclée destinée à la formation de feuilles composites ne contient pas plus de 50 % en poids de particules, lesdits déchets étant pulvérisés en particules dont la taille ne dépasse pas 1,4 mm;
et dans lequel procédé l'on envoie entre les deux rouleaux (2, 3) une première composition ne contenant pas des particules susdites, qui forme une première couche (7a) sur le rouleau chaud (2), puis on envoie entre les deux rouleaux (2, 3) ladite composition recyclée contenant des particules susdites, qui forme une deuxième couche (7b) par-dessus la première couche (7a), et l'on envoie entre les deux rouleaux (2, 3) une troisième composition ne contenant pas non plus des particules susdites, qui forme une troisième couche (7c) par-dessus la deuxième couche, de sorte que la feuille composite (7) est un stratifié de ces trois couches, lesdites compositions comprenant des fibres inorganiques ou des fibres organiques, ou une combinaison de telles fibres, ainsi qu'un matériau caoutchouteux, des adjuvants pour caoutchouc et une charge.

2. Procédé de fabrication de pièces de garniture d'étanchéité, dans lequel on forme une feuille composite en opérant selon le procédé de la revendication 1 et l'on y découpe les pièces de forme voulue, les chutes de découpage constituant lesdits déchets.

3. Feuille composite constituée
- d'une première couche (7a) faite d'une première composition destinée à la formation de feuilles composites,
- d'une deuxième couche (7b) faite d'une deuxième composition destinée à la formation de feuilles composites, qui est une composition recyclée dans laquelle on a incorporé, en une proportion ne dépassant pas 50 % en poids, des déchets obtenus à partir d'une autre feuille composite formée antérieurement, après les avoir pulvérisés, à l'aide d'un broyeur, en fines particules dont la taille ne dépasse pas 1,4 mm,
- et d'une troisième couche (7c) faite d'une troisième composition destinée à la formation de feuilles composites, lesdites compositions comprenant des fibres inorganiques ou des fibres organiques, ou une combinaison de telles fibres, ainsi qu'un matériau caoutchouteux, des adjuvants pour caoutchouc et une charge.

4. Feuille composite conforme à la revendication 3, dans laquelle les fibres inorganiques sont choisies parmi des fibres de verte, de la laine de roche, diverses fibres céramiques, des fibres de carbone et des fibres métalliques, et les fibres organiques sont choisies parmi les fibres de polyamides aromatiques, les fibrilles de polyamides aromatiques, les fibres de polyamides et les fibres de polyoléfines.

5. Feuille composite conforme à la revendication 3 ou 4, dans laquelle lesdites compositions contiennent un mélange de fibres organiques et de fibres inorganiques où le rapport pondéral des fibres inorganiques aux fibres organiques vaut à peu près de 1/1 à 4/1.

6. Feuille composite conforme à la revendication 3, 4 ou 5, laquelle feuille composite contient de 10 à 60 % en poids de fibres inorganiques, de fibres organiques ou d'une combinaison de telles fibres, selon le cas.

7. Feuille composite conforme à l'une des revendications 3 à 6, dans laquelle le matériau caoutchouteux est choisi parmi un caoutchouc nitrile, un caoutchouc de styrène/butadiène, un caoutchouc d'isoprène, un caoutchouc de chloroprène, un caoutchouc d'éthylène/propylène, un caoutchouc au fluor et un caoutchouc silicone, et se trouve formulé dans la feuille composite en une proportion de 10 à 30 % en poids.

8. Feuille composite conforme à l'une des revendications 3 à 7, dans laquelle les adjuvants pour caoutchouc sont choisis parmi les agents de vulcanisation et les agents accélérant la vulcanisation, et se trouvent formulés dans la feuille composite en une proportion de 0,5 à 10 % en poids.

9. Feuille composite conforme à l'une des revendications 3 à 8, dans laquelle la charge est choisie parmi de l'argile, du talc, du sulfate de baryum, du bicarbonate de sodium, du graphite, du carbonate de calcium, du noir de carbone, de la terre à diatomées, du mica, du sulfate d'aluminium, de l'alumine hydratée et du carbonate de magnésium, et se trouve formulée dans la feuille composite en une proportion de 10 à 70 % en poids.

10. Pièce de garniture d'étanchéité, découpée selon la forme voulue dans une feuille composite conforme à l'une des revendications 3 à 9.
